# EUROPÄISCHE PATENTSCHRIFT

(11) **EP 1 289 711 B1**
(45) Veröffentlichungstag und Bekanntmachung des Hinweises auf die Patenterteilung: **19.07.2006**
(21) Anmeldenummer: 01947167.1
(22) Anmeldetag: 23.05.2001
(51) Int. Cl.: B23Q 7/04

(54) **VORRICHTUNG ZUM GREIFEN UND TRANSPORTIEREN VON WERKSTÜCKEN IN DREHMASCHINEN**
DEVICE FOR GRIPPING AND TRANSPORTING WORKPIECES IN TURNING MACHINES
DISPOSITIF DE PREHENSION ET DE TRANSPORT DE PIECES DANS DES MACHINES ROTATIVES

(30) Priorität: 24.05.2000 DE 10025614
(43) Veröffentlichungstag der Anmeldung: 12.03.2003
(73) Patentinhaber: Schuster, Helmut, 86920 Denklingen (DE)
(72) Erfinder: Schuster, Helmut, 86920 Denklingen (DE)
(74) Vertreter: Käck, Jürgen
(86) Internationale Anmeldenummer: PCT/DE2001/001967
(87) Internationale Veröffentlichungsnummer: WO 2001/089761

(56) Entgegenhaltungen:
- EP-A- 0 283 462
- EP-A- 0 721 821
- EP-A- 0 978 351
- US-A- 4 204 441

## Beschreibung

Die Erfindung betrifft eine Vorrichtung zum Greifen und Transportieren von Werkstücken in Drehmaschinen, insbesondere in vertikal angeordneten Drehmaschinen, als auch in Fräs- und Bohrmaschinen für den Werkstück- und Palettentransport.

Für den rationellen Einsatz von Drehmaschinen zur Bearbeitung von Werkstücken nacheinander - gegebenenfalls mit unterschiedlichen Werkzeugen - sind in der Vergangenheit unterschiedliche Mehrspindelwerkzeugmaschinen vorgeschlagen worden. Eine solche Mehrspindeldrehmaschine ist aus der DE 195 04 369 bekannt. Dort umfaßt die Mehrspindeldrehmaschine ein Maschinengestell, einen am Maschinengestell drehbar gelagerten Spindelträger, mehrere an dem Spindelträger hängend angeordneten Werkstückspindeln. Mit einer solchen Mehrspindeldrehmaschine kann schon eine recht große Bearbeitungskapazität erreicht werden. Aus der Zeitschrift Produktion, Nr. 8 Februar 1997, Seite 10, ist zum Beispiel eine Mehrspindeldrehmaschine mit acht Spindeln bekannt.

Mehrspindeldrehmaschinen weisen aber grundsätzliche Nachteile auf, die durch die vorliegende Erfindung überwunden werden sollen. Einerseits sind Mehrspindeldrehmaschinen störungsanfällig, da die Bearbeitungsvorgänge dicht nebeneinander ausgeführt werden und sich gegenseitig beeinflussen können. Andererseits sind Mehrspindeldrehmaschinen wenig flexibel im Einsatz. Wenn z.B. ein Vorgang sieben oder noch weniger Bearbeitungsteilvorgänge notwendig macht, die alle ungefähr den gleichen Zeitaufwand erforderlich machen, so kann eine Mehrspindeldrehmaschine mit acht Spindeln nicht mehr richtig ausgenutzt werden. Weiterhin ist die Zugänglichkeit bei Wartung und Reparatur sehr stark eingeschränkt.

Aus der DE 198 35 868 ist eine Vorrichtung zum Bearbeiten von Werkstücken bekannt, die mehrere verschiedene oder teilweise auch gleiche Bearbeitungsvorgänge nacheinander ausführbar macht, aber dennoch die erforderliche Flexibilität aufweist, um bei einem neuen Bearbeitungsvorgang Leerlauf zu vermeiden. Die Bearbeitungsmaschine ist trotz der hohen Durchsatzfähigkeit leicht zugänglich.

Für eine solche Mehrfachdrehmaschine kommt aber auf den Konstrukteur die Aufgabe zu, die Werkstücke zwischen den einzelnen Bearbeitungseinrichtungen zu transportieren. Grundsätzlich ist der in der DE 198 36 868 bekannte Ansatz mit Rotationsschwenkeinrichtungen zum Transport der Werkstücke zwischen den einzelnen Bearbeitungseinheiten durchführbar. Es hat sich jedoch herausgestellt, dass gerade der Transportvorgang zwischen den Dreheinrichtungen noch verbessert werden kann, und zwar sollte der Transportvorgang der Werkstücke universeller sein, insbesondere mehrere Freiheitsgrade ermöglichen.

Für eine vorteilhaftes Ausgestaltung einer Anordnung von Mehrfachdrehmaschinen ist dabei der Transport und das Zuführen der Werkstücke von erheblicher Bedeutung. Insbesondere kann für den universellen Einsatz die Anordnung mit einer Wendeeinrichtung zum Wenden der Werkstücke an Stelle einer Drehmaschine von Nachteil sein, da dann der Wendevorgang immer nur an einer Stelle durchgeführt werden kann.

Aus der EP-A-0 721 821 ist eine Handhabungsvorrichtung für eine Werkzeugmaschine bekannt, die im wesentlichen die Merkmale des Oberbegriffs des Anspruchs 1 aufweist. Diese Vorrichtung ist mit einem Hebelantrieb ausgerüstet, was allerdings die Drehung des Werkstückes erschwert. Es hat sich zudem herausgestellt, dass für die Behandlung schwerer Werkstücke bei hoher Drehgeschwindigkeit der Einsatz eins Hebelmechanismus ungeeignet ist. Auch diesen Nachteil gilt es durch die Erfindung zu überwinden.

Die Aufgabe der Erfindung wird mit einer Greif- und Transportvorrichtung nach Anspruch 1 erfüllt. Die Maßnahmen der Erfindung haben dabei zunächst einmal zur Folge, daß das Werkstück aus der Dreheinrichtung herausgenommen werden kann, was vorzugsweise nach unten geschieht. Eine vorzugsweise Schwenkung um 180° horizontal transportiert das Werkstück zur nächsten Dreheinrichtung und führt es durch ein emporheben ein. Durch die Möglichkeit des Wendens des Werkstückes um seine Querachse ist es möglich, das Werkstück so zu drehen, dass das vormals obere Ende nunmehr nach unten ausgerichtet ist.

Durch die speziellen Maßnahmen der Erfindung, dass nämlich ein Schenkarm, der in sich selbst drehbar ist und damit, anders als ein Hebelmechanismus wie aus der EP-A-0 721821 bekannt, auch massive Werkstücke schnell drehen kann, seinen Schwenkpunkt an seinem proximalen Ende hat, wobei der Schwenkarm zudem in einer Richtung - nämlich im wesentlichen seitwärts und damit so, dass die Richtung eines stabförmigen Werkstückes im wesentlichen beibehalten wird - bewegt werden kann, wird die Stabilität der Bewegung - also die Möglichkeit, massive Werkstücke, vorzugsweise stabförmige Werkstücke schnell in bestimmten Bewegungsabläufen zu bewegen - erleichtert. Die Schwenkung erfolgt vorzugsweise so, dass bei stabförmigem Werkstück die Richtung des Stabes beim Schwenken ebenfalls beibehalten wird. Es muss dabei betont werden, dass z.B. gegenüber einem Hebelmechanismus wie z.B. aus der EP-A-0 721 821 bekannt die Bewegungsfreiheit in gewisser Weise eingeschränkt, nämlich an die vorgesehenen Bewegungsabläufe angepasst sind. Dafür wird aber eben der Vorteil erworben, die Geschwindigkeit bei massiveren Werkstücken zu erhöhen.

Einen besonderen Vorteil erhält die Greif- und Transportvorrichtung dann, wenn sie mit gleichartigen Vorrichtungen zusammenarbeiten kann. In diesem Fall ist es nämlich möglich, das Werkstück, das aus der Drehmaschine herausgenommen wurde, in die gleiche oder die nächste Drehmaschine in umgekehrter Ausrichtung - also gewendet - einzuführen, auch wenn das Werkstück so kurz ist, das es von der Transport- und Greifvorrichtung nur dort gegriffen werden kann, wo im nächsten Bearbeitungsvorgang die Bearbeitung angesetzt werden soll. In diesem Falle greift die erste Transport- und Greifvorrichtung das Werkstück eben dort und wendet es um die Querachse um 180°, wie oben beschreiben. Sodann wird es von der zweiten Transport- und Greifeinrichtung gegriffen, die erste Transport- und Greifeinrichtung wird gelöst und das Werkstück wird in die gleiche oder die nächste Drehbearbeitungsmaschine eingeführt. Ein solches Umgreifen ist insbesondere dann von Vorteil, wenn das Werkstück kurz ist und mit zwei Drehbearbeitungsvorgängen bearbeitet werden soll, deren Bearbeitungsbereiche sich aneinander anschließen. Selbstverständlich kann das Wenden (Drehung um die Querachse) nicht nur mit der ersten, sondern alternativ auch mit der zweiten Transport- und Greifeinrichtung vorgesehen sein.

Für die Greifeinrichtungen selbst sind mehrere Greifmechanismen möglich, die teilweise in den Unteransprüchen speziell definiert sind.

Die vorgenannten sowie die beanspruchten und in dem nachfolgenden Ausführungsbeispiel beschriebenen, erfindungsgemäß zu verwendenden Elemente unterliegen in ihrer Größe, Formgestaltung und technischen Konzeptionen keinen besonderen Ausnahmebedingungen, so daß die in dem jeweiligen Anwendungsgebiet bekannten Auswahlkriterien uneingeschränkt Anwendung finden können.

Weitere Einzelheiten, Merkmale und Vorteile des Gegenstandes der Erfindung ergeben sich aus der nachfolgenden Beschreibung der dazugehörigen Zeichnung, in der - beispielhaft - eine erfindungsgemäße Transport- und Greifvorrichtung dargestellt ist.

In den Zeichnungen zeigt
- Fig. 1: eine Ansicht der Mehrfachdrehmaschine mit einer erfindungsgemäßen Transport- und Greifvorrichtung von vorn;

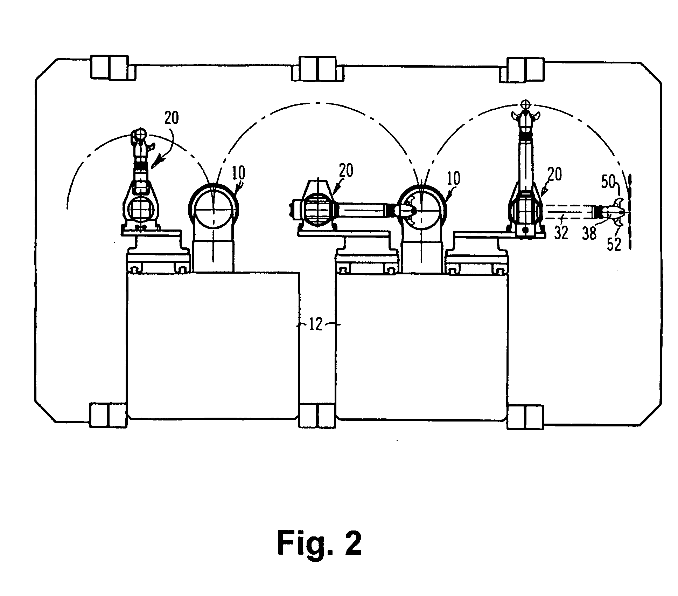

- Fig. 2: die Vorrichtung aus Fig.1 von oben;
- Fig. 3: eine erfindungsgemäße Transport- und Greifvorrichtung mit dem dazugehörigen Antrieb von der Seite;
- Fig. 4: den Greifer der Vorrichtung nach Fig. 3 von oben;
- Fig. 5: einen alternativen Greifer von oben mit kürzerem Arm;

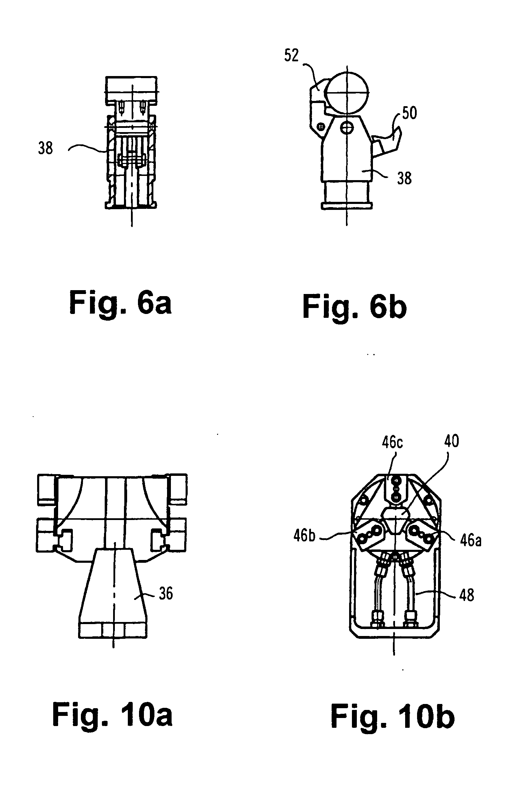

- Fig. 6: den Greifkopf nach Fig. 4 und 5 von der Seite und von oben (6a und 6b) ;
- Fig. 7: den Greifer der Vorrichtung mit Greifbacken von der Seite;
- Fig. 8: den Greifer der Vorrichtung mit Greifbacken von oben;
- Fig. 9: einen alternativen Greifer entsprechend Fig. 7 mit Greifbacken und mit kürzerem Arm, von oben;
- Fig. 10: einen alternativen Kopf zum Spannen des Werkstückes von der Seite und von oben (10a und 10b) ;
- Fig. 11: den Greifer der Vorrichtung ohne Greifkopf von der Seite;
- Fig. 12: den Greifer nach Fig. 11 ohne Greifkopf von oben;
- Fig. 13: den alternativen Greifer entsprechend Fig. 10 ohne Greifkopf, aber mit kürzerem Arm; und
- Fig. 14: einen alternativen Einsatz der Transport- und Greifvorrichtung für den Einsatz in einer Fräsmaschine.

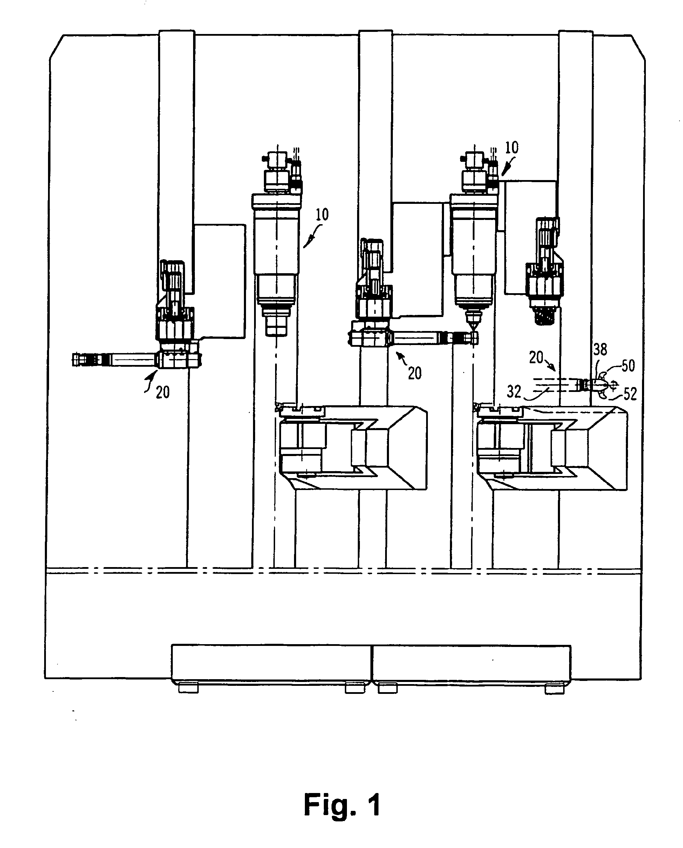

In Figur 1 ist eine Anordnung zur Erfindung von vorn dargestellt, bei der drei Transport- und Greifvorrichtungen 20 zwei vertikal angeordnete Drehmaschinen 10 bedienen. Sowohl die Drehmaschinen 10 als auch die Transport- und Greifvorrichtungen 20 sind an Montageblöcken 12 angebracht. Die Werkstücke 40 werden durch die Transport - und Greifvorrichtungen zu den Drehmaschinen zugeführt, indem sie unter die Spanneinrichtung der Drehmaschine geschwenkt und dann durch Anheben des Greiferarmes 32 in die Spanneinrichtung eingeführt werden. In der Spanneinrichtung der Drehmaschinen werden die Werkstücke 40 sodann auf herkömmliche Weise eingespannt und bearbeitet. Während der Bearbeitung wird der Arm der Transport- und Greifvorrichtung 20 von der Drehmaschine weggeschwenkt, um den Bearbeitungsvorgang nicht zu stören. Nach Ende des Bearbeitungsvorganges wird dann im einfachen Anwendungsfall der Greifarm 32 der nächsten Transport- und Greifvorrichtung 20 zum Werkstück 40 hingeschwenkt und das Werkstück wird durch Betätigung der Greifzangen 50 und 52 gefasst. Dabei ist der Greifarm durch Betätigung der Höheneinstellung in die richtige Höhe gebracht worden. Durch Schwenken des Greifarmes 32 wird das Werkstück 40 sodann zur nächsten Drehmaschine oder - im Falle des letzten Bearbeitungsvorganges - zur weiteren Lagerung oder sonstigen Versorgung - geschwenkt. Dabei kann das Werkstück durch eine Drehung des Greifarmes 32 in sich auch um seine Querachse um 180° gedreht werden, wenn z.B. die andere Seite des Werkstückes 40, an der es zuvor eingespannt worden ist, bearbeitet werden soll.

In einem besonderen Bearbeitungsvorgang kann das Wenden auch durch ein zusätzliches Umgreifen geschehen. Dabei greift zunächst der Greifarm einer der beiden Transport- und Greifvorrichtungen 20 das Werkstück 40 nach seiner Bearbeitung und entlädt es wie vorstehend beschrieben. Daraufhin wird das Werkstück 40 um seine Querachse um 180° gedreht, sodass der vormals obere Teil nunmehr unten ist. Der Greifarm 32 der zweiten Transport- und Greifvorrichtung 20 greift nun das Werkstück 40 in seinem nunmehr unteren Teil, woraufhin der Greifarm 32 der ersten Transport- und Greifeinrichtung 20 das Werkstück 40 freigibt. Die zweite Transport- und Greifvorrichtung 20 führt das Werkstück 40 nun in die Drehmaschine 10 oder - nach einem Transportvorgang durch Schwenken seines Greifarmes 32 - in die nächste Drehmaschine 10 ein, wo das Werkstück 40 sodann im anderen Ende bearbeitet werden kann. Selbstverständlich kann die Drehung des Werkstückes um seine Querachse auch von dem Greifarm 32 der zweiten Transport- und Greifvorrichtung 20 durchgeführt werden. Der hier beschriebene, besondere Bearbeitungsvorgang hat dann Vorteile, wenn das Werkstück kurz ist und in zwei Bearbeitungsvorgängen vollständig bearbeitet werden kann und soll, die jeweils einen Teil des Werkstückes betreffen.

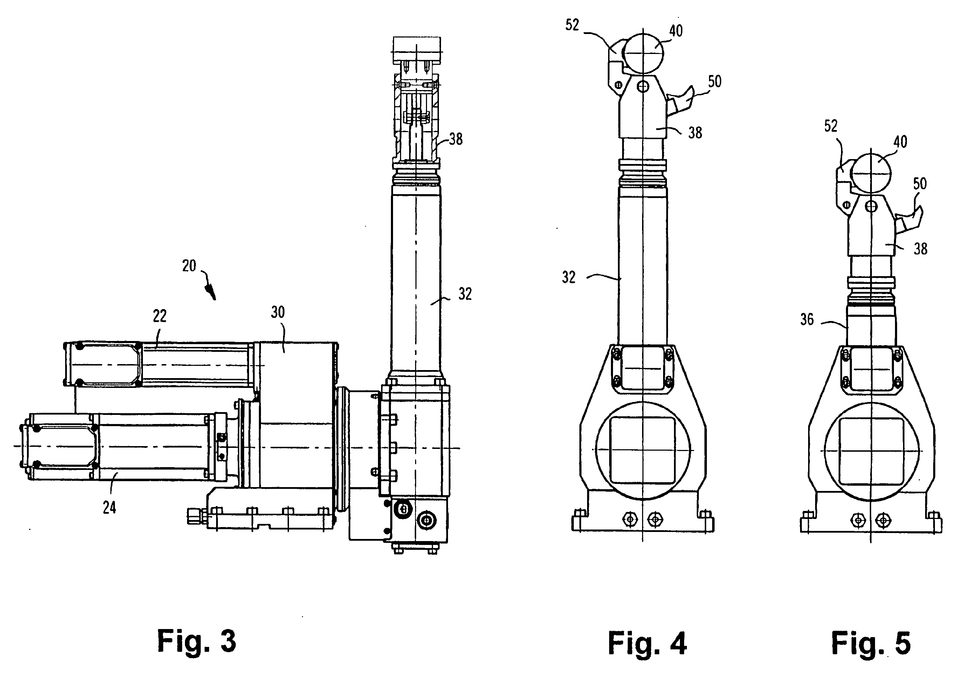

Die Transport- und Greifvorrichtungen 20 sind in den Figuren 3 und 4 detailliert dargestellt. Der zentrale Block 30 der Transport- und Greifvorrichtungen 20 beinhaltet ein Getriebe, das vom Antrieb 22 angetrieben wird. Mit der Antriebseinrichtung 22 kann der Greifarm 32 um sich selbst gedreht werden. Mit der zweiten Antriebseinrichtung 24 kann der Greifarm 32 um seinen radialen Lagerungspunkt 34 an seinem proximalen Ende geschwenkt werden. Zusätzlich weist die Mehrfachbearbeitungsmaschine der vorliegenden Ausführung einen Liriearantrieb auf, mit dem der Greifarm 32 als ganzes in einer Linearbewegung von dem Block 30 weg- und zu ihm hinbewegt werden kann, um die vorstehend beschriebenen Hebe- und Absenkvorgänge des Werkstückes 40 zu ermöglichen. Im Ausführungsbeispiel wird der Greifvorgang selbst hydraulisch angetrieben, wodurch die Greifzangen 50 und 52 geschlossen oder geöffnet werden.

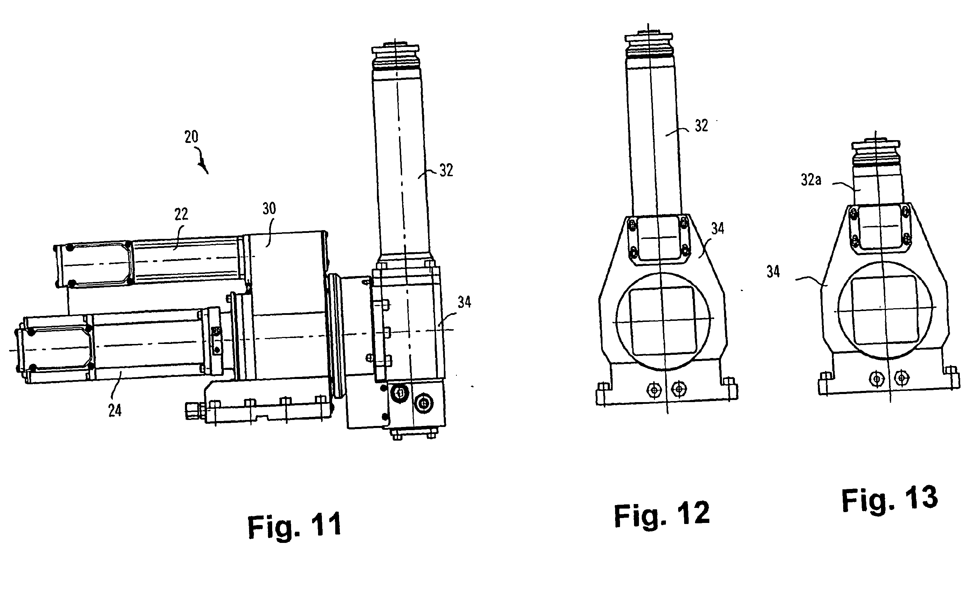

Die Greifzangen 50 und 52 sind so angeordnet, dass sie das Werkstück bei geöffneten Zangen soweit freigeben, dass sie beim Schwenken des Greifarmes dieses nicht stören, im Ausführungsbeispiel wird ein Öffnungswinkel con über 180° erreicht. Die Greifzangen selbst weisen eine Kontur auf, so dass beide Greifzangen das Werkstück jeweils in zwei Angriffspunkten bzw. Linien erfassen. Im Ausführungsbeispiel ist vorgesehen, dass bei erheblich unterschiedlichen Werkstückdicken die Greifköpfe 38 ausgetauscht werden. Dies wird dadurch ermöglicht, dass die Greifköpfe modular an die Greifarme entsprechend der Figuren 11 bis 13 angebracht werden können.

In Figur 5 ist der Greifarm 32a einer Transport- und Greifvorrichtung mit verkürztem Greifarm dargestellt.

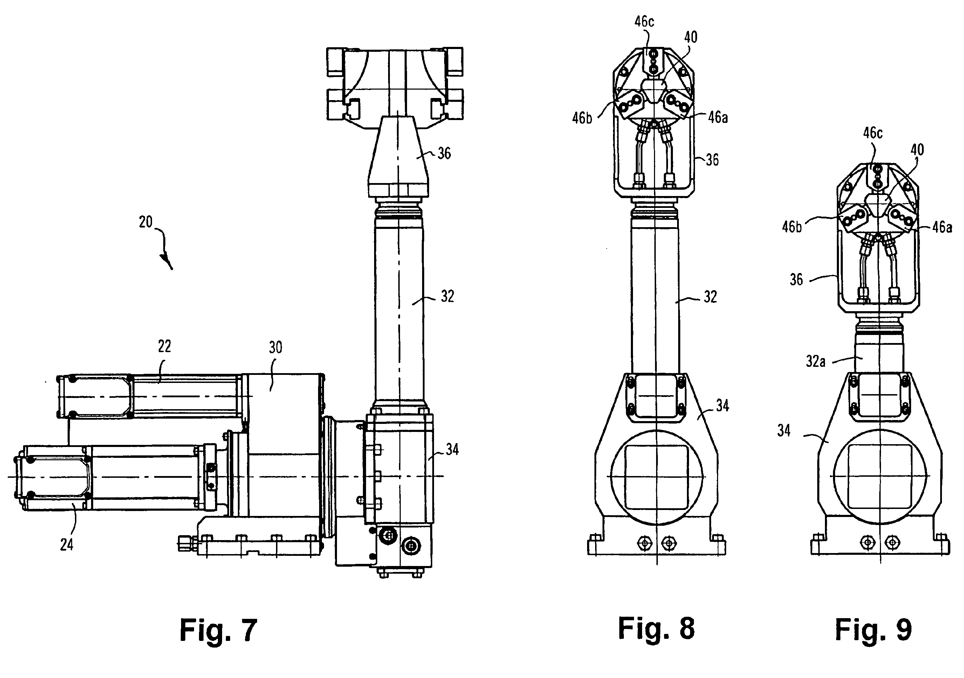

In den Figuren 7 bis 9 ist eine Transport- und Greifvorrichtung dargestellt, bei der - entsprechend dem modularen Konzept - ein alternativer Greifkopf mit drei bzw. sechs Greifbacken 46a, 46b und 46c dargestellt ist. Diese Greifbacken werden in geöffnetem Zustand durch den vorstehend bereits beschriebenen Hebevorgang über Werkstück 40 gestülpt und durch radiales Schließen der Backen geschlossen, wodurch das Werkstück 40 festgehalten wird. Dieses alternative Konzept mit den Greifbacken, die im den Figuren 10a und 10b nochmals einzeln dargestellt werden, hat insbesondere dann Vorteile, wenn das Werkstück längs seiner Länge nicht rund ist, sondern eine spezielle Kontur aufweist, so dass besondere Angriffspunkte gewählt werden müssen und sich Greifzangen nicht so gut eignen. In Figur 10b sind die hydraulischen bzw. pneumatischen Zuführungsleitungen 48 dargestellt, die an den Greifarm angeschlossen werden.

In der Anordnung, in der die Erfindung beispielhaft zum Einsatz kommt, sind mehrere Drehmaschinen mit jeweils vertikaler Drehachse enthalten. Jede dieser Drehmaschinen weist eine Hauptspindel zur Aufnahme des Werkstückes auf. Im Ausführungsbeispiel ist diese Hauptspindel jeweils oben angebracht. Die einzelnen Drehmaschinen sind zudem mit einer Rollenlunette zur seitlichen Unterstützung des Werkstückes während der rotierenden Bearbeitung bzw. mit einer unten angebrachten, synchron zur Hauptspindel rotierenden weiteren Spindel (Synchronspindel) ausgerüstet.

An jeder Drehmaschine ist im vorderen, im Ausführungsbeispiel im rechten Bereich eine revolverartige Bereitstellungseinrichtung für verschiedene Bearbeitungswerkzeuge vorgesehen. Vorteilhaft ist es, diese Einrichtung in einem Winkel von ca. 45° seitwärts vorn von der Drehmaschine anzuordnen.

Vor der ersten Drehmaschine ist eine Schneideeinrichtung für langgestrecktes Werkgut vorgesehen. Das Werkgut wird aus einer Fördereinrichtung zugeführt und nach dem Schneiden mit einer vor der ersten Drehmaschine angeordneten Transport- und Greifvorrichtung der ersten Drehmaschine zugeführt.

Hinter der letzten Drehmaschine ist eine zusätzliche Transport- und Greifvorrichtung zur Versorgung des bearbeiteten Werkstückes vorgesehen.

Die Anordnung ist als Ganzes in einem Gehäuse untergebracht, das nach oben und zu den Seiten geschlossen ist. Dieses Gehäuse ermöglicht es somit, dass die Drehmaschinen von vorn zugänglich sind. Es kann aber vorgesehen sein, dass das Gehäuse auch nach vorn verschlossen werden kann.

Zusätzlich sind im Ausführungsbeispiel die Drehmaschinen nach vorn in Höhe des Bearbeitungsvorganges mit einer Verkleidung versehen, um den notwendigen Arbeitsschutz zu gewährleisten.

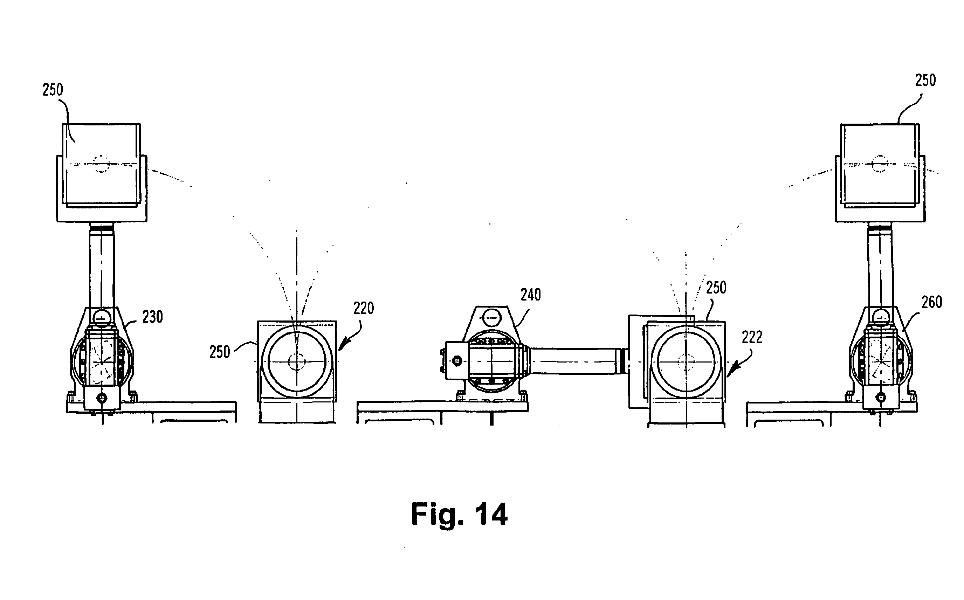

In Figur 14 ist eine weitere Verwendung der Transport- und Greifvorrichtung gemäß der vorliegenden Erfindung dargestellt. Es handelt sich bei dem Einsatz gemäß Figur 14 um eine Mehrfachfräsmaschine, bei der die Werkstücke auf einer quadratischen Palette angeliefert und bearbeitet werden. Diese Mehrfachfräsmaschine ist im Ausführungsbeispiel dieser alternativen Anwendung mit zwei Frässtationen bestückt, die die Werkstücke an den Positionen 220 und 222 bearbeiten. Die Werkstücke werden mit einer ersten Greif- und Transportvorrichtung 230 uauf einer quadratischen Palette 250 zugeführt. Nach dem ersten Bearbeitungsvorgang transportiert eine zweite Greif- und Transportvorrichtung 240 die Palette 250 mit dem Werkstück weiter zur zweiten Fräsposition 222. Nach dem zweiten Fräsvorgang wird die Palette 250 dann mit Hilfe einer dritten Greif- und Transportvorrichtung abtransportiert.

An Hand des letzten Beispiels wird es dem Fachmann klar, dass der Einsatz der Greif- und Transportvorrichtung gemäß der vorliegenden Erfindung auch auf Kombinationen von Dreh-Fräs- oder Bohrmaschinen mit mehreren Stationen ausgeweitet werden kann, so dass die Erfindung im Rahmen der nachfolgenden Patentansprüche ein weites Einsatzspektrum erfahren kann.

## Patentansprüche

1. Transport- und Greifvorrichtung zum Zu- und Abtransportieren von Werkstücken, insbesondere von im wesentlichen stabförmigen Werkstücken, zu und von einer Bearbeitungsvorrichtung, mit
- einem Greifmechanismus (38; 50, 52; 46a, 46b, 46c) zum Greifen des Werkstückes (40), insbesondere zum Greifen längs des Stabes,
- einer Einrichtung zum Bewegen des Werkstückes im wesentlichen in Längsrichtung des Werkstückes (40) durch Verschieben der Transport- und Greifvorrichtung,
- einer Einrichtung (24) zum Schwenken des Werkstückes (40), insbesondere unter Beibehaltung der Greifrichtung, Drehung des Werkstückes (40) im
- einer Einrichtung (22, 30) zur Drehung des Werkstückes (40) im wesentlichen um die Querachse des Werkstückes (40),
- wobei die Vorrichtung einen Arm (32, 32a) aufweist, an dessen distalen Ende die Greifeinrichtung (38; 50, 52; 46a, 46b, 46c) angeordnet ist,
**dadurch gekennzeichnet, dass**
- der Arm (32, 32a) durch die Einrichtung (24) zum Schwenken des Werkstückes um einen Ansatzpunkt an seinem proximalen Ende drehbar ist, und der Arm (32, 32a) durch die Einrichtung (22, 30) zur Drehung des Werkstückes um seine längsachse drehbar ist.

2. Transport- und Greifvorrichtung nach Anspruch 1, **dadurch gekennzeichnet, dass** die Greifvorrichtung zwei Greifzangen (50, 52) mit einer Kontur zur Festlegung der Haltepunkte des Werkstückes (40) umfasst.

3. Transport- und Greifvorrichtung nach Anspruch 2, **dadurch gekennzeichnet, dass** die Greif zangen (50, 52) einen so großen Öffnungswinkel ermöglichen, dass die geöffneten Greifzangen (50, 52) seitlich am Werkstück (40) vor bei bewegt werden können.

4. Transport- und Greifvorrichtung nach Anspruch 1, **dadurch gekennzeichnet, dass** die Greifvorrichtung zumindest drei Haltebacken (46a, 46b, 46c) umfasst, die zum Öffnen radial bewegt werden und wobei das Werkstück (40) senkrecht zu den Haltebacken (46a, 46b, 46c) eingeführt wird, bevor die Haltebacken (46a, 46b, 46c) radial auf das Werkstück (40) hin bewegt werden, um dieses zu halten.

5. Vorrichtung zum Bearbeiten von Werkstücken mit mindestens zwei nebeneinander angeordneten Drehmaschinen (10), die jeweils eine senkrecht eingerichtete, rotationsarigetriebene Hauptspindel zum Einspannen des Werkstückes und mindestens eine Einrichtung zur Aufnahme mehrerer Bearbeitungswerkzeuge aufweisen, wobei die Drehachsen aller Drehmaschinen (10) im wesentlichen senkrecht angeordnet sind, und zwischen den Drehmaschinen (10) jeweils eine Transport- und Greifvorrichtung nach einem der Ansprüche 1 bis 4 vorgesehen ist, mit der das Werkstück nach der Bearbeitung durch horizontales Schwenken von einer der Drehmaschinen zur nächsten Drehmaschine übergeben werden kann.

6. Vorrichtung nach Anspruch 5, **dadurch gekennzeichnet, daß** eine erste Transport- und Greifvorrichtung (10) vorgesehen ist, mit der das Werkstück als Rohling aus einer Zuführung der ersten Drehmaschine zugeführt werden kann.

7. Verfahren zum Transport eines Werkstückes (40) in einer Vorrichtung nach Anspruch 5 oder 6, **dadurch gekennzeichnet, dass** zunächst der Greifarm (32, 32a) einer von zwei Transport- und Greifvorrichtungen 20, die Zugriff zum Werkstück (40) in der jeweiligen Drehmaschine haben, das Werkstück (40) nach einer ersten Bearbeitung entlädt, daraufhin das Werkstück (40) um seine Querachse um 180° wendet, sodass der vormals obere Teil unten ist, der Greifarm (32, 32a) der zweiten Transport- und Greifvorrichtung (20) das Werkstück (40) in seinem nunmehr unteren Teil greift und die zweite Transport- und Greifvorrichtung (20) das Werkstück (40) nun in die Drehmaschine (10) oder nach einem Transportvorgang durch Schwenken seines Greifarmes (32, 32a) in die nächste Drehmaschine (10) einführt.

8. Vorrichtung zum Bearbeiten von Werkstücken mit mindestens zwei Fräsmaschinen (220, 222), wobei zwischen den Fräsmaschinen (220, 222) jeweils eine Transport- und Greifvorrichtung nach einem der Ansprüche 1 bis 4 vorgesehen ist, mit der das Werkstück nach der Bearbeitung durch Schwenken von einer der Fräsmaschinen zur nächsten Fräsmaschine übergeben werden kann.

9. Verfahren zum Transport eines Werkstückes (40) in einer Vorrichtung nach Anspruch 8, **dadurch gekennzeichnet, dass** Werkstücke auf einer Palette (250) angeordnet sind und die Transport- und Greifvorrichtungen (220, 222) die Palette (250) greifen und das Werkstück auf der Palette (250) transportieren.

## Claims

1. Transporting and gripping device for transporting workpieces, particularly substantially rod-shaped workpieces, to and from a processing device, comprising:
a gripping mechanism (38; 50, 52; 46a, 46b, 46c) for gripping the workpiece (40), particularly for gripping along the rod;
a device for moving the workpiece substantially in the longitudinal direction of the workpiece (40) by displacing the transporting and gripping device;
a device (24) for swiveling the workpiece (40), particularly by maintaining the direction of gripping;
a device (22, 30) for rotating the workpiece (40) substantially about the lateral axis of the workpiece (40);
wherein the device has an arm (32, 32a), with the gripping device (38; 50, 52; 46a, 46b, 46c) arranged at the distal end thereof;
**characterized in that**
the arm (32, 32a) is rotatable about a base point at its proximal end by the device (24) for swiveling the workpiece; and
the arm (32, 32a) is rotatable about its lateral axis by the device (22, 30) for rotating the workpiece.

2. Transporting and gripping device according to claim 1, **characterized in that** the gripping device includes two gripping tongs (50, 52) with a contour for specifying the retaining points of the workpiece (40).

3. Transporting and gripping device according to claim 2, **characterized in that** the gripping tongs (50, 52) enable such a wide opening angle that the opened gripping tongs (50, 52) can be moved laterally past the workpiece (40).

4. Transporting and gripping device according to claim 1, **characterized in that** the gripping device includes at least three retaining jaws (46a, 46b, 46c), which are moved radially for opening, and wherein the workpiece (40) is inserted orthogonally to the retaining jaws (46a, 46b, 46c), before the retaining jaws (46a, 46b, 46c) are moved radially towards the workpiece (40) to retain it.

5. Device for processing workpieces including at least two turning machines (10) disposed side-by-side, each having a rotationally driven main spindle installed vertically, for clamping the workpiece, and at least one device for receiving multiple processing tools, wherein the rotational axes of all of the turning machines (10) are disposed substantially vertically, and between the turning machines (10) one transporting and gripping device according to any one of claims 1 to 4 is provided, by which the workpiece can be passed from one of the turning machines to the next turning machine by swiveling horizontally after processing.

6. Device according to claim 5, **characterized in that** a first transporting and gripping device (10) is provided, by which the workpiece can be supplied to the first turning machine as a blank from a supply device.

7. Method for transporting a workpiece (40) in a device according to claim 5 or 6, **characterized in that**, first, the gripping arm (32, 32a) of one of two transporting and gripping devices 20 having access to the workpiece (40) in the respective turning machine, discharges the workpiece (40) after a first processing, thereupon turns the workpiece (40) 180° about its lateral axis, such that the previously top portion is at the bottom, the gripping arm (32, 32a) of the second transporting and gripping device (20) grips the workpiece (40) in its now bottom portion, and the second transporting and gripping device (20) now inserts the workpiece (40) into the turning machine (10), or after a transporting operation, into the next turning machine (10) by swiveling its gripping arm (32, 32a).

8. Device for processing workpieces including at least two milling machines (220, 222), wherein between the milling machines (220, 222) one transporting and gripping device according to any one of claims 1 to 4 is provided, by which the workpiece can be passed from one of the milling machines to the next milling machine by turning after processing.

9. Method for transporting a workpiece (40) in a device according to claim 8, **characterized in that** workpieces are disposed on a pallet (250) and the transporting and gripping devices (220, 222) grip the pallet (250) and transport the workpiece on the pallet (250).

## Revendications

1. Dispositif de préhension et de transport destiné à amener et prélever des pièces, notamment des pièces essentiellement en forme de barre, en direction et en provenance d'un dispositif d'usinage, comprenant
- un mécanisme de préhension (38 ; 50, 52 ; 46a, 46b, 46c) destiné à saisir la pièce (40), notamment à la saisir le long de la barre,
- un dispositif destiné à déplacer la pièce essentiellement dans la direction longitudinale de la pièce (40) par déplacement du dispositif de préhension et de transport,
- un dispositif (24) destiné à faire pivoter la pièce (40), en conservant notamment la direction de préhension,
- un dispositif (22, 30) destiné à mettre en rotation la pièce (40) essentiellement autour de l'axe transversal de la pièce (40),
- le dispositif comprenant un bras (32, 32a), sur l'extrémité distale duquel est disposé le dispositif de préhension (38 ; 50, 52 ; 46a, 46b, 46c),
**caractérisé en ce que**
- le bras (32, 32a) est, grâce au dispositif (24) destiné à faire pivoter la pièce, mobile en rotation autour d'un point de départ sur son extrémité proximale, et le bras (32, 32a) est mobile en rotation autour de son axe longitudinal grâce au dispositif (22, 30) destiné à mettre en rotation la pièce.

2. Dispositif de préhension et de transport selon la revendication 1, **caractérisé en ce que** le dispositif de préhension comporte deux pinces de préhension (50, 52) dotées d'un contour destiné à déterminer les points de fixation de la pièce (40).

3. Dispositif de préhension et de transport selon la revendication 2, **caractérisé en ce que** les pinces de préhension (50, 52) autorisent un angle d'ouverture si important que les pinces de préhension (50, 52) ouvertes peuvent passer latéralement devant la pièce (40).

4. Dispositif de préhension et de transport selon la revendication 1, **caractérisé en ce que** le dispositif de préhension comporte au moins trois joues de fixation (46a, 46b, 46c), qui sont déplacées radialement en vue de l'ouverture et la pièce (40) étant introduite perpendiculairement aux joues de fixation (46a, 46b, 46c) avant que les joues de fixation (46a, 46b, 46c) ne se soient déplacées radialement en direction de la pièce (40) afin de fixer celle-ci.

5. Dispositif d'usinage de pièces comprenant au moins deux tours (10) juxtaposés, qui comprennent chacun une broche principale entraînée en rotation, orientée verticalement, destinée à serrer la pièce et au moins un dispositif de réception de plusieurs outils d'usinage, les axes de rotation de tous les tours (10) étant disposés essentiellement verticalement, et entre les tours (10) étant chaque fois prévu un dispositif de préhension et de transport selon l'une quelconque des revendications 1 à 4, par lequel la pièce peut être transférée après usinage par un pivotement horizontal d'un des tours au tour suivant.

6. Dispositif selon la revendication 5, **caractérisé en ce qu'**il est prévu un premier dispositif de préhension et de transport (10), avec lequel la pièce peut être amenée comme ébauche d'un dispositif d'amenée au premier tour.

7. Procédé de transport d'une pièce (40) dans un dispositif selon la revendication 5 ou 6, **caractérisé en ce que** le bras préhenseur (32, 32a) d'un de deux dispositifs de préhension et de transport (20), qui ont accès à la pièce (40) dans le tour respectif, décharge tout d'abord la pièce (40) après un premier usinage, sur ce la pièce (40) tourne sur 180° autour de son axe transversal, de sorte que la partie précédemment supérieure est en dessous, le bras préhenseur (32, 32a) du second dispositif de préhension et de transport (20) saisit la pièce (40) dans sa partie à présent inférieure et le second dispositif de préhension et de transport (20) introduit à présent la pièce (40) dans le tour (10) ou, après une étape de transport par pivotement de son bras préhenseur (32, 32a), dans le tour (10) suivant.

8. Dispositif d'usinage de pièces comprenant au moins deux fraiseuses (220, 222), un dispositif de préhension et de transport selon l'une quelconque des revendications 1 à 4 étant chaque fois prévu entre les fraiseuses (220, 222), avec lequel la pièce peut être transférée, après usinage, par pivotement d'une des fraiseuses à la fraiseuse suivante.

9. Procédé de transport d'une pièce (40) dans un dispositif selon la revendication 8, **caractérisé en ce que** des pièces sont disposées sur une palette (250) et les dispositifs de préhension et de transport (220, 222) saisissent la palette (250) et transportent la pièce sur la palette (250).
